# EUROPEAN PATENT SPECIFICATION

(11) **EP 1 720 285 B1**
(45) Date of publication and mention of the grant of the patent: **07.01.2009**
(21) Application number: 06008300.3
(22) Date of filing: 21.04.2006
(51) Int. Cl.: H04L 12/24

(54) **Apparatus and method for processing messages in a network management system**
Vorrichtung und Verfahren zur Verarbeitung von Nachrichten in einem Netzwerkverwaltungssystem
Appareil et procédé pour le traitement de messages dans un système de gestion de réseau

(30) Priority: 06.05.2005 KR 20050038152
(43) Date of publication of application: 08.11.2006
(73) Proprietor: Samsung Electronics Co., Ltd., Yeongtong-gu Suwon-si, Gyeonggi-do (KR)
(72) Inventor: Cho, Sang-Gil, Suwon-si Gyeonggi-do (KR); Yang, Won-Jong, Suwon-si Gyeonggi-do (KR)
(74) Representative: Lang, Johannes

(56) References cited:
- EP-A- 0 278 316
- WO-A-02/45317
- US-A- 5 285 199

## Description

### BACKGROUND OF THE INVENTION

### Technical Field

The present invention relates to an apparatus and method for processing messages in a network management system (NMS) and, more particularly, to such an apparatus and method which are capable of minimizing interruption of existing services and facilitating maintenance when functions are added.

### Related Art

Network management refers to monitoring network resources for the purposes of troubleshooting, potential problem discovery, performance improvement, documenting, reporting, and so forth. Network management has various facets, such as performance management, analysis of resources and protocols, bandwidth management, capacity planning, simulation, and so forth. Conventionally, since the structure of a network was previously relatively simple, the network could be easily managed, as can been seen in WO-02/45317.

However, networks have become more complicated over time, and their rate of change has become quite rapid as well. Currently, requirements related to the Internet and multimedia have increased, so that customers now want to receive certain services without interruption anytime and anywhere. Thus, there is need for a next generation network (NGN) that can meet such requirements. Wired and wireless integrated services which combine the broadband capability of a wired network with the mobility of a wireless network are appearing. Because an NGN must enable the provision of different services (e.g., voice, data, multimedia etc.) through one integrated network, a separate communication equipment component must be designed for each service. Furthermore, there is a current trend toward developing packet networks. Thus, structurally, it is practically impossible to convert all current networks into IP-based packet networks at once. For this reason, it is essential for an NGN to include elements for interworking with existing networks. In this manner, as the level of complexity and rate of development of networks increase, various kinds of equipment come into use in the networks. Moreover, the same type of equipment can appear in various versions at the same time. Furthermore, various management protocols are used together in one network. Hence, a current network management system (NMS) has to manage various kinds of equipment, various versions, and different protocols at the same time. In addition, continuous modification of functions accompanies rapid change in the network, resulting in the addition or modification of services. In such a changing environment, the NMS must be able to perform maintenance with ease.

In general, network management can be performed by exchanging messages between the NMS and the respective network elements. However, as the network becomes more complex, messages become more varied and complex as well. Whenever new equipment or a new version is added, messages intended for use are also added. Furthermore, when the messages used become diverse, they are processed in a complex manner.

### SUMMARY OF THE INVENTION

It is an objective of the present invention to provide an apparatus and method for processing messages in a network management system (NMS), the apparatus and method being capable of facilitating maintenance and addition or deletion of diagnostic items.

It is another objective of the present invention to provide an apparatus and method for processing messages for a network diagnosis system, wherein messages transmitted or received by various versions of various pieces of equipment and used for diagnosis in a network diagnosis system are efficiently distributed and processed according to processing routines.

In order to accomplish these objectives, according to an aspect of the present invention, there is provided an apparatus for processing messages in a network management system. The apparatus is defined in claim 1.

According to another aspect of the present invention, there is provided a method of processing messages in a network management system. The method is defined in claim 6.

### BRIEF DESCRIPTION OF THE DRAWINGS

A more complete appreciation of the invention and many of the attendant advantages thereof will be readily apparent as the same becomes better understood by reference to the following detailed description when considered in conjunction with the accompanying drawings in which like reference symbols indicate the same or similar components, wherein:
Fig. 1 is a diagram of a program code for processing messages;
Fig. 2 is a schematic block diagram of an apparatus for processing messages in accordance with the present invention;
Fig. 3 is a flowchart of a method for processing messages in accordance with the present invention;
Fig. 4 is a flowchart showing operations performed by, and flow of signals between, components of a message processing apparatus of the present invention in accordance with a message processing method according to the present invention;
Fig. 5A is a flowchart showing an actual method for processing messages according to an exemplary embodiment of the present invention; and
Fig. 5B shows an example of handlers which are generated and used in the process shown in Fig. 5A.

### DETAILED DESCRIPTION OF THE INVENTION

The present invention relates to an apparatus and method for processing messages in a network management system (NMS), wherein messages transmitted to and messages received from various kinds of equipment having various versions are distributed and processed according to appropriate processing routines in the NMS.

To this end, the apparatus and method for processing messages for the NMS according to the present invention must include the functions of generating a processing routine for processing each message, and causing each message to be processed through the corresponding processing routine.

Furthermore, the apparatus and method for processing messages for the NMS according to the present invention is adapted to store a message processing routine once generated so that it is possible to use it again later, and so that it is possible to save time in generating message processing routines.

Hereinafter, exemplary embodiments of the present invention will be described in detail with reference to the accompanying drawings. Throughout the drawings, the same reference numerals or characters are used to designate the same elements or similar elements having the same function. Also, matters that are well known in the art will not be described below in order keep the description of the present invention clear and concise.

First, a processing routine for processing messages (hereinafter, referred to as a "handler") will be described.

There are a variety of handlers, such as an interactive handler, a concurrent handler, a cloned handler, and so forth, the handlers being categorized according to their respective functions.

The interactive handler processes messages in order of arrival. Other messages are placed on standby until a first message is completely processed while a called thread performs all work. When the message processing is completed, subsequent messages in a buffer are sequentially processed. The interactive handler is mainly used when processing in a generated order is required.

The concurrent handler is used when the messages are to be processed regardless of order. The cloned handler relates to the generation of a new handler to process each message.

In addition to the above-mentioned examples, various handlers may be used for processing the messages. Each of the messages is preferably processed by an appropriate handler.

Meanwhile, the details of the present invention, including the handlers used in the present invention, may be varied more or less according to characteristics of the program language used by each system. However, the present invention is not restricted by the characteristics of a particular program language, and may be applied to similar functions and operations without being limited to a particular program code, name, etc.

Meanwhile, the apparatus and method for processing messages in an NMS according to the present invention can use information included in each message so that each message can be processed by an appropriate handler. Hereinafter, the present invention will be described with reference to an exemplary embodiment in which various items included in each message, such as the type of network equipment NE_TYPE, the version of network equipment NE_VERSON, and the name of the message MSG_NAME, are used as information for selecting a handler suitable for processing each message. In the present invention, some or all of the items may be used for selecting the handler. Of course, the information for selecting the handler may include different or additional items as necessary. Generally, each message used in the NMS already includes the information. Therefore, the present invention may be applied to the NMS without varying the format of the message.

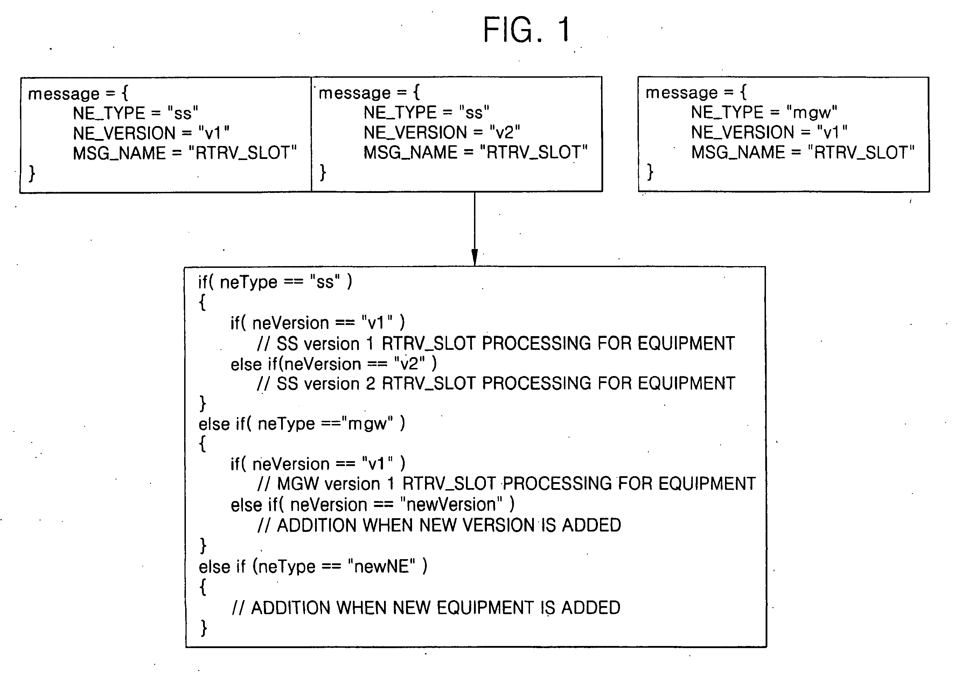

Fig. 1 is a diagram of a program code for processing messages.

As shown in the code of Fig. 1, in order to perform proper processing on each of various kinds of equipment, a conditional statement is used in the code. This requires the addition of a new conditional statement whenever new equipment is added. Furthermore, this code must make use of an overlapping conditional statement or carry out a conditional jump in a jumped function once more in order to simultaneously manage various versions of each piece of equipment. Therefore, there is a problem in that the code becomes more complicated due to the addition of a conditional statement every time a new version is added either by adding new equipment or upgrading old equipment. Furthermore, there is another problem in that performance of maintenance gradually becomes more difficult due to the repeated correction of existing code. In addition, there is yet another problem in that a processing block is restarted in order to correct the existing code, thereby producing adverse effects such as interruption of services, generation of errors in existing functions, and the like.

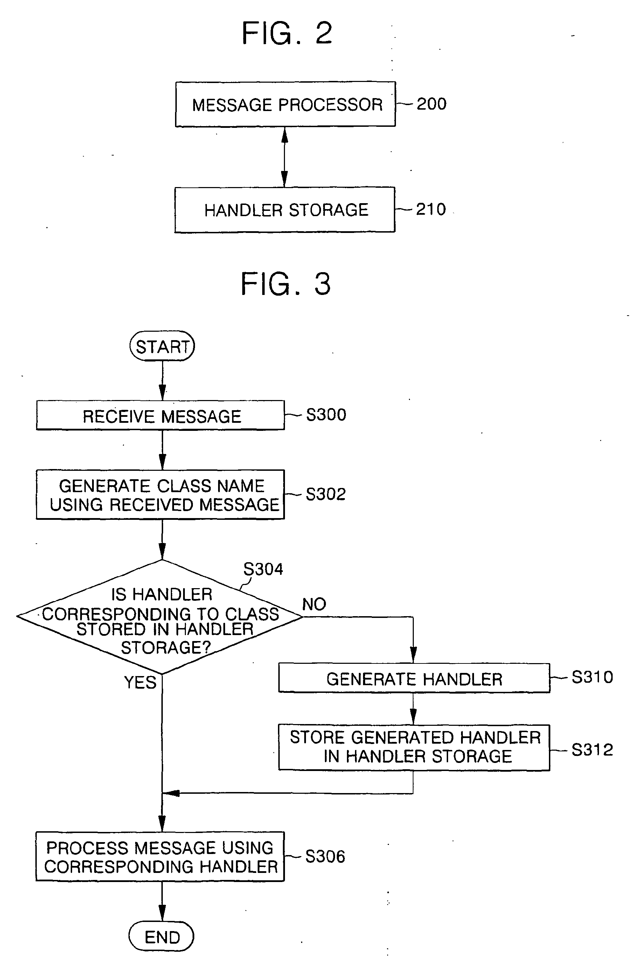

Fig. 2 is a schematic block diagram of an apparatus for processing messages in accordance with the present invention.

As shown in Fig. 2, the apparatus for processing messages in an NMS according to the present invention comprises a message processor 200 and a handler storage 210.

In this regard, the message processor 200 generates a handler required to process received messages using information for selecting the handler included in each message. The message is processed by the handler generated by the message processor 200. The generation and management of the handler for processing the messages may be performed by a class loader. The class loader generates the handler by downloading a class file from an internal directory or an external server (not shown).

Meanwhile, the generated handler may be stored in handler storage 210 for reuse in the future. When the handlers are stored and then used again, the message processing apparatus of the present invention has only to perform the generating process on each handler once at the first request, and thus there is no need to newly generate each handler at every request. The storage and reuse of the handlers saves time in generating the handlers. In order to store the handlers, a storage space is required.

The handler storage 220 of Fig. 2 is a space for storing handlers generated by the message processor 200. Once stored in the handler storage 220, the handlers can be used at every occurrence of a subsequent request of the message processing apparatus of the present invention.

A method for processing messages in an NMS according to the present invention will now be described with reference to the attached drawings.

Fig. 3 is a flowchart of a method for processing messages in accordance with the present invention. Processes shown in Fig. 3 can be performed by the message processing apparatus of the present invention shown in Fig. 2.

The message processing apparatus of the present invention receives a message for processing in step S300 of Fig. 3. In this regard, the received message includes information for selecting the handler. In the following description, as long as separate discrimination is not required, the "information for selecting the handler" is called "information". The information is used for generation of the handler intended to process the message later. The information may include at least one of the type of network equipment NE_TYPE, the version of network equipment NE_VERSION, and the name of the message MSG_NAME.

In step S302, the message processing apparatus of the present invention uses the received message to generate a class name of the handler intended to process the message. At this point, the message processing apparatus can combine the information included in the corresponding message to generate the class name of the handler intended to process the corresponding message. For example, it is assumed that the received message has the information, NE_TYPE="ss", NE_VERSION="v1" "and MSG_NAME="RTRV_SLOT." The message processing apparatus receives the message and combines the information included in the received message, namely ss, v1, and RTRV_SLOT, to generate the class name of the handler intended to process the message. As a result, the class name denoted by "ss.v1.RTRV_SLOT" is generated.

In step S304, the message processing apparatus determines whether the handler corresponding to the generated class name is stored in handler storage 210 of Fig. 2. The handlers that have been already generated are stored in the handler storage 210. In other words, the message processing apparatus determines whether the handler having the class name "ss.v1.RTRV_SLOT" generated in step S302 is stored in the handler storage 210.

If it is determined that the handler for processing the received message is stored in the handler storage 210, the message processing apparatus processes the received message using the stored handler in step S306 .

However, if it is determined that the handler for processing the received message is not stored in the handler storage 210, the message processing apparatus generates the corresponding handler in step S310. Thereafter, in step S312, the message processing apparatus stores the generated handler so that it can be used again later. The handler is stored in the handler storage 210.

Then, the message processing apparatus performs step S306, that is, it processes the received message using the generated handler.

Alternatively, the message processing apparatus may generate and use a new handler whenever required without storing any handlers. In this case, the process of determining whether a handler is stored or searching for a stored handler is omitted. Such an exemplary embodiment can be understood from the description of Fig. 3 without need of additional description.

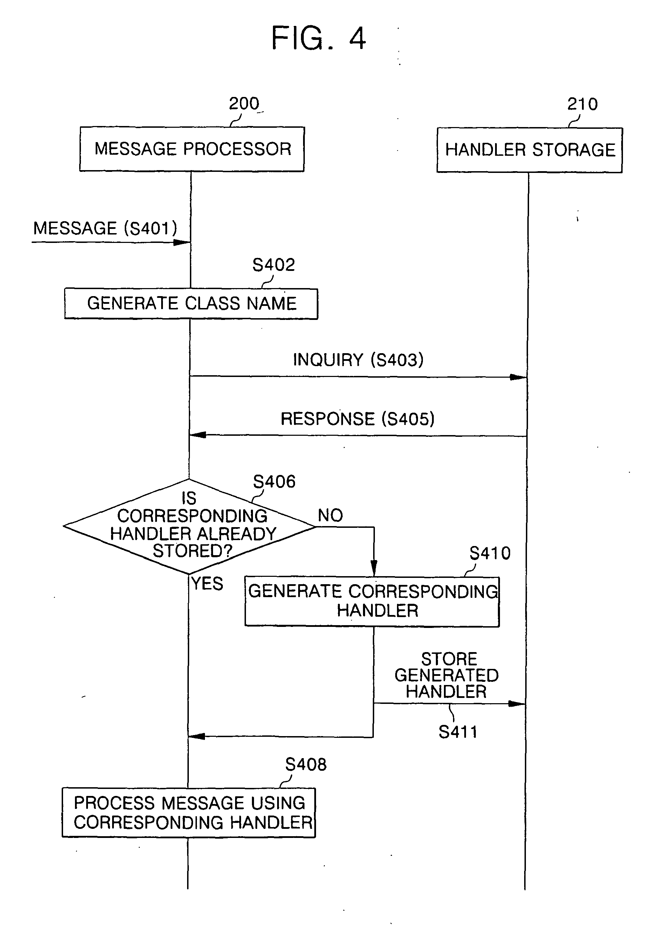

Fig. 4 is a flowchart showing operations performed by, and flow of signals between, components of a message processing apparatus of the present invention in accordance with a message processing method according to the present invention.

More specifically, Fig. 4 shows operations and exchange of signals or information between the message processor 200 and the handler storage 210. Each process of Fig. 4 is described below.

In step S401, the message processor 200 receives a message intended for processing. The message includes information used to generate a handler for application of the present invention. The information includes at least one of the type of network equipment NE_TYPE, the version of network equipment NE_VERSION, and the name of the message MSG_NAME.

In step S402 of Fig. 4, the message processor 200 generates a class name of the handler to process the message using the information included in the received message. In step S403, the message processor 200 which generates the class name of the handler sends an inquiry to the handler storage 210 as to whether or not the corresponding handler has been already generated and stored. In this process, the class name of the handler is transmitted by the message processor 200 to the handler storage 210.

Upon receiving the inquiry from the message processor 200 as to whether the handler is stored, the handler storage 210 searches to determine whether the corresponding class is stored by using the class name of the received handler, and transmits the search result to the message processor 200 in step S405.

In step S406, the message processor 200 determines from the search result whether the handler for processing the message 401 is stored in the handler storage 210. The message processor 200 then operates in two different ways according to whether or not the corresponding handler is stored.

First, if the corresponding handler is stored in the message storage 210, the message processor 200 (in step S408) processes the received message 401 using the corresponding handler. However, if the corresponding handler is not stored in the message storage 210, the message processor 200 (in step S410) generates the handler for processing the received message 401 with reference to the class name generated in step S402. The message processor 200 then (in step S411) stores the generated handler in the handler storage 210. Then, in step S408, the message processor 200 processes the received message 401 using the generated handler.

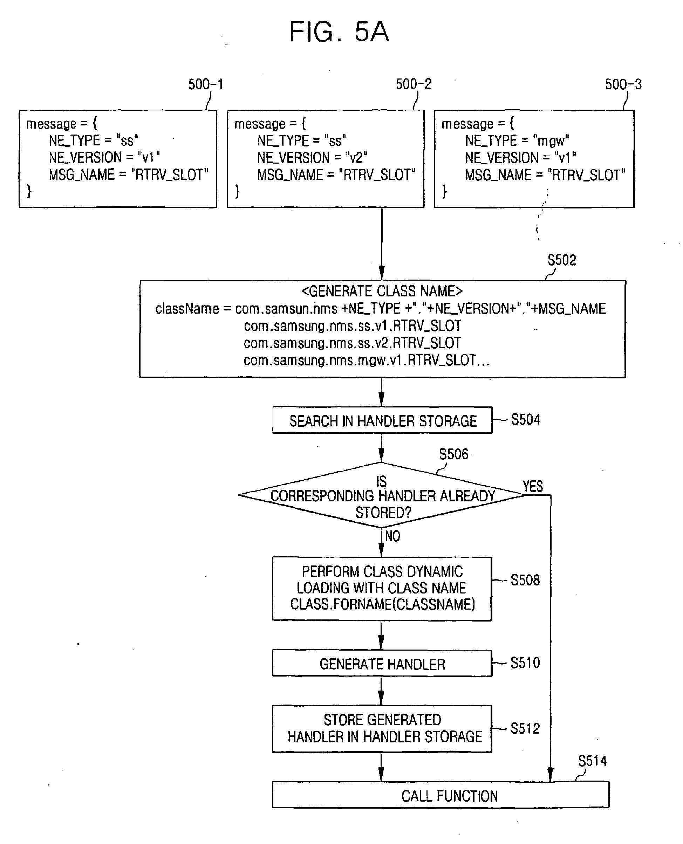

Fig. 5A is a flowchart showing an actual method for processing messages according to an exemplary embodiment of the present invention.

More specifically, Fig. 5A shows an operation of the present invention when three message 500-1 to 500-3 are received. Each of the received messages 500-1 to 500-3 includes NE_TYPE, NE_VERSION, and MSG_NAME.

Initially, receipt of the message 500-1 in which NE_TYPE is "ss", NE_VERSION is "v1", and MSG_NAME is "RTRV_SLOT" will be described.

In step S502, a class name is generated using information included in the message. The class name is generated by combining information included in each received message. Therefore, when the message 500-1 including "ss", "v1", and "RTRV_SLOT" is received, the class name denoted by "ss.v1.RTRV_SLOT" can be generated. In this regard, a part "com.samsung.nms" is a default value given in the system, and is not the part having an important influence on the present invention. In this manner, each system may have a name. In the following description, "com.samsung.nms" is no longer referred to.

In step S504, handler storage 210 is searched to determine whether or not a handler having the class name "ss.v1.RTRV_SLOT" is stored therein. In step S506, it is determined from the search result whether or not the corresponding handler is stored in the handler storage 210.

If it is determined that the corresponding handler is not stored in the handler storage 210, steps S508 to S514 are performed. In step S508, class dynamic loading is performed using the class name. In step S510, the handler is generated using the loaded class. In step S512, the generated handler is stored in the handler storage 210. In step S514, a call function is carried out wherein the message is processed using the handler. That is, message processing is performed using a corresponding interface function which the handler calls.

Meanwhile, if it is determined in step S506 that the corresponding handler exists and is already stored, the message is processed using the stored handler in step S514.

Next, receipt of the message 500-2, in which NE_TYPE is "ss", NE_VERSION is "v2", and MSG_NAME is "RTRV_SLOT", will be described. In this case, similar to the foregoing, steps S502 to S514 are performed. However, the class name generated in step S502 becomes "ss.v2.RTRV_SLOT", which is formed by the combination of "ss", "v2", and "RTRV_SLOT" included in the message 500-2. Thus, handler search, handler generation, etc. are performed in steps S504 to S514 using "ss.v2.RTRV_SLOT."

Finally, receipt of the message 500-3, in which NE_TYPE is "mgw", NE_VERSION is "v1", and MSG_NAME is "RTRV_SLOT", will be described. In this case, as in the foregoing, steps S502 to S514 are performed. However, "mgw.v1.RTRV_SLOT" is used as the class name.

As shown in Fig. 5A, when a new message is added due to the addition of new equipment, a new version, or a new protocol, the present invention can easily process the added message.

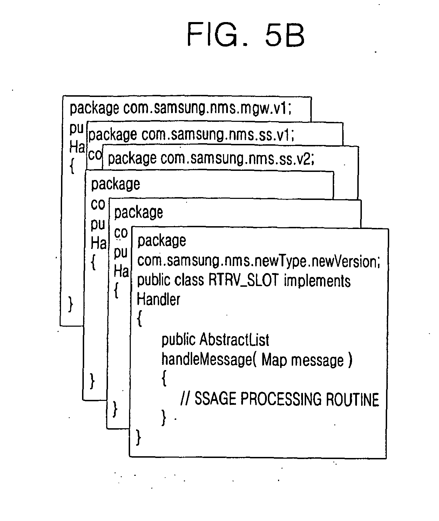

Fig. 5B shows an example of handlers which are generated and used in the process shown in Fig. 5A.

As shown in Fig. 5B, handlers having various package names are used for processing messages.

As set forth above, upon processing each received message, the present invention makes use of the handler interface which is called using the handler corresponding to each message. Thereby, even when a new message is added due to the addition of network equipment, a new version or a new protocol, the present invention can be used without modification.

According to the present invention as mentioned above, messages which are transmitted or received by various versions of various pieces of equipment, and which are used for diagnosis in a network diagnosis system, can be efficiently distributed and processed according to processing routines. Thereby, it is easy to perform maintenance of the network diagnosis system, as well as addition or deletion of diagnosis items. Furthermore, the present invention has no effect on other services when diagnosis items are added or deleted.

While exemplary embodiments of the present invention have been described, it will be understood by those skilled in the art that the present invention is not limited to the described exemplary embodiments. Rather, various changes and modifications can be made within the scope of the present invention as defined by the following claims.

## Claims

1. An apparatus for processing messages in a network management system, the apparatus comprising:
a handler storage (210) for storing a number of handlers (S312, S411, S512) having a class name formed (S302, S402, S502) by a combination text of information included in a message from the network management; and
a message processor (200) which is responsive to reception of the message from the network management (S300, S401, S500) for searching the handler (S304, S403, S504) which has the class name matched to the combination text of the information included in the received message from the network management, generating a handler (S310, S410, S510), when the class name does not match to the combination text of the information, and for processing the received message from the network management using the handler (S306, S408, S514).

2. The apparatus of claim 1, wherein the handler is generated (S310, S410, S510) by downloading a class file (S508) having the class name from class files stored in an external server.

3. The apparatus of claim 1, wherein the information included in the received message from the network management includes at least one of a type of network equipment, a version of network equipment, and a name of the received message from the network management.

4. The apparatus of claim 1, wherein the message processor (200) processes a message from the network management by using a handler interface loaded by the handler.

5. The apparatus of claim 1, wherein the message processor (200) generates a class name (S302, S402, S502) using information included in the received message from the network management (S300, S401, S500), and generates a new handler (S310, S410, S510) using the generated class name, and stores the generated handler (S312, S411, S512) in the handler storage (210).

6. A method of processing a message in a network management system, the method comprising the steps of:
searching a handler (S304, S403, S504) having a class name matched to a combination text of the information included in a received message from the network management, when the network management system the received message from the network management (S300, S401,S500);
generating a handler (S310, S410, S510), if the class name not having the combination text of information included in the message from the network management by the network management system, and
storing the handler (S312, S411, S512); and
processing the received message from the network management by using the searched handler (S306, S408, S514) by the network management system.

7. The method of claim 6, wherein the information included in the message from the network management comprises at least one of a type of network equipment, a version of network equipment, and a name of the received message.

8. The method of claim 6, further comprising the steps of:
generating a class name (S302, S402, S502) using information included in the received message from the network management (S300, S401,S500);
generating a new handler (S310, S410, S510) using the generated class name), when there is no handler corresponding to the received message from the network management in the network management system; and
storing the generated handler (S312, S411, S512) in the handler storage (210).

## Patentansprüche

1. Vorrichtung zum Verarbeiten von Nachrichten in einem Netzwerkverwaltungssystem, die Vorrichtung aufweisend:
einen Handler-Speicher (210) zum Speichern einer Anzahl von Handlern (S312, S411, S512) mit einem Klassennamen, der durch eine Textkombination von Information, die in einer Nachricht von der Netzwerkverwaltung enthalten ist, gebildet wird (S302, S402, S502); und
einen Nachrichtenprozessor (200), der auf Empfang der Nachricht von der Netzwerkverwaltung reagiert (S300, S401, S500), zum Suchen des Handlers (S304, S403, S504), der den Klassennamen passend zu dem Kombinationstext der in der empfangenen Nachricht von der Netzwerkverwaltung enthaltenen Information aufweist, zum Erzeugen eines Handlers (S310, S410, S510), wenn der Klassenname nicht zu dem Kombinationstext der Information passt, und zum Verarbeiten der empfangenen Nachricht von der Netzwerkverwaltung unter Verwendung des Handlers (S306, S408, S514).

2. Vorrichtung nach Anspruch 1, wobei der Handler erzeugt wird (S310, S410, S510) durch Herunterladen einer Klassendatei (S508) mit dem Klassennamen von Klassendateien, die in einem externen Server gespeichert sind.

3. Vorrichtung nach Anspruch 1, wobei die in der empfangenen Nachricht von der Netzwerkverwaltung enthaltene Information einen Netzwerkeinrichtungstyp, eine Netzwerkeinrichtungsversion und/oder einen Namen der empfangenen Meldung von der Netzwerkverwaltung enthält.

4. Vorrichtung nach Anspruch 1, wobei der Nachrichtenprozessor (200) eine Nachricht von der Netzwerkverwaltung verarbeitet unter Verwendung einer Handler-Schnittstelle, die durch den Handler geladen ist.

5. Vorrichtung nach Anspruch 1, wobei der Nachrichtenprozessor (200) einen Klassennamen erzeugt (S302, S402, S502) unter Verwendung der Information, die in der empfangenen Nachricht von der Netzwerkverwaltung (S300, S401, S500) enthalten ist, und Erzeugen eines neuen Handlers (S310, S410, S510) unter Verwendung des erzeugten Klassennamens, und den erzeugten Handler (S312, S411, S512) in dem Handler Speicher (210) speichert.

6. Verfahren zum Verarbeiten einer Nachricht in einem Netzwerkverwaltungssystem, wobei das Verfahren die Schritte aufweist:
Suchen eines Handlers (S304, S403, S504), der einen Klassennamen passend zu einem Kombinationstext der in einer empfangenen Nachricht von der Netzwerkverwaltung enthaltenen Information aufweist, wenn das Netzwerkverwaltungssystem die Nachricht von der Netzwerkverwaltung (S300, S401, S500) empfängt;
Erzeugen eines Handlers (S310, S410, S510), falls der Klassenname nicht den Kombinationstext der in der Nachricht von der Netzwerkverwaltung enthaltenen Information aufweist, durch das Netzwerkverwaltungssystem und
Speichern des Handlers (S312, S411, S512); und
Verarbeiten der von der Netzwerkverwaltung empfangenen Nachricht unter Verwendung des gesuchten Handlers (S306, S408, S514) durch das Netzwerkverwaltungssystem.

7. Verfahren nach Anspruch 6, wobei die in der Nachricht von der Netzwerkverwaltung enthaltene Information einen Netzwerkeinrichtungstyp, eine Netzwerkeinrichtungsversion und einen Namen der empfangenen Nachricht enthält.

8. Verfahren nach Anspruch 6, weiterhin aufweisend die Schritte:
Erzeugen eines Klassennamens (S302, S402, S502) unter Verwendung der Information, die in der empfangenen Nachricht von der Netzwerkverwaltung (S300, S401, S500) enthalten ist;
Erzeugen eines neuen Handlers (S310, S410, S510) unter Verwendung des erzeugten Klassennamens, wenn kein Handler korrespondierend zu der empfangenen Nachricht von der Netzwerkverwaltung in dem Netzwerkverwaltungssystem vorhanden ist; und
Speichern des erzeugten Handlers (S312, S411, S512) in dem Handler-Speicher (210).

## Revendications

1. Appareil pour le traitement de messages dans un système de gestion de réseau, l'appareil comportant :
une mémoire (210) de gestionnaires destinée à stocker un certain nombre de gestionnaires (S312, S411, S512) ayant un nom de place (S302, S402, S502) formé par un texte de combinaison d'informations inclus dans un message provenant du système de gestion du réseau ; et
un processeur (200) de message qui, en réponse à la réception du message provenant du système de gestion de réseau (S30, S401, S500), est destiné à rechercher le gestionnaire (S304, S403, S504) qui a le nom de classe adapté au texte de combinaison des informations inclus dans le message reçu depuis le système de gestion du réseau, à générer un gestionnaire (S310, S410, S510) lorsque le nom de classe n'est pas adapté au texte de combinaison des informations, et à traiter le message reçu provenant du système de gestion du réseau en utilisant le gestionnaire (S306, S408, S514).

2. Appareil selon la revendication 1, dans lequel le gestionnaire est généré (S310, S410, S510) par le téléchargement d'un fichier de classes (S508) ayant le nom de classe parmi des fichiers de classes stockés dans un serveur extérieur.

3. Appareil selon la revendication 1, dans lequel les informations incluses dans le message reçu provenant du système de gestion de réseau comprennent au moins l'un d'un type d'équipement du réseau, d'une version d'équipement du réseau et d'un nom du message reçu provenant du système de gestion du réseau.

4. Appareil selon la revendication 1, dans lequel le processeur (200) de messages traite un message provenant du système de gestion du réseau en utilisant une interface de gestionnaire chargée par le gestionnaire.

5. Appareil selon la revendication 1, dans lequel le processeur (200) de messages génère un nom de classe (S302, S402, S502) en utilisant des informations incluses dans le message reçu provenant du système de gestion de réseau (S300, S401, S500), et génère un nouveau gestionnaire (S310, S410, S510) en utilisant le nom de classe généré, et stocke le gestionnaire généré (S312, S411, S512) dans la mémoire (210) de gestionnaires.

6. Procédé de traitement d'un message dans un système de gestion de réseau, le procédé comprenant les étapes qui consistent :
à rechercher un gestionnaire (S304, S403, S504) ayant un nom de classe adapté à un texte de combinaison des informations inclus dans un message reçu provenant du système de gestion de réseau, lorsque le système de gestion de réseau a reçu le message de la gestion de réseau (S300, S401, S500) ;
à générer un gestionnaire (S310, S410, S510), si le nom de classe n'ayant pas le texte de combinaison d'informations inclus dans le message provenant de la gestion du réseau par le système de gestion du réseau, et
à stocker le gestionnaire (S312, S411, S512) ; et
à traiter le message reçu de la gestion du réseau en utilisant le gestionnaire recherché (S306, S408, S514) par le système de gestion de réseau.

7. Procédé selon la revendication 6, dans lequel l'information incluse dans le message provenant de la gestion du réseau comprend au moins l'un d'un type d'équipement du réseau, d'une version d'équipement du réseau et d'un nom du message reçu.

8. Procédé selon la revendication 6, comprenant en outre les étapes qui consistent :
à générer un nom de classe (S302, S402, S502) en utilisant une information incluse dans le message reçu provenant de la gestion du réseau (S300, S401, S500);
à générer un nouveau gestionnaire (S310, S410, S510) en utilisant le nom de classe généré, lorsqu'il n'y a pas de gestionnaire correspondant au message reçu provenant de la gestion du réseau dans le système de gestion de réseau ; et
à stocker le gestionnaire généré (S312, S411, S512) dans la mémoire de gestionnaires (210).
